# EUROPÄISCHE PATENTSCHRIFT

(11) **EP 2 255 078 B1**
(45) Veröffentlichungstag und Bekanntmachung des Hinweises auf die Patenterteilung: **01.01.2014**
(21) Anmeldenummer: 09715471.0
(22) Anmeldetag: 25.02.2009
(51) Int. Cl.: B61C 5/04, B61C 17/02, F01N 3/20, F01N 13/14, F02B 77/13, F02B 77/11

(54) **SCHIENENFAHRZEUG MIT ABGASREINIGUNG**
RAILWAY VEHICLE WITH EXHAUST GAS CLEANING
VÉHICULE SUR RAILS AVEC ÉPURATION DES GAZ D'ÉCHAPPEMENT.

(30) Priorität: 27.02.2008 DE 102008011329
(43) Veröffentlichungstag der Anmeldung: 01.12.2010
(73) Patentinhaber: Bombardier Transportation GmbH, 10785 Berlin (DE)
(72) Erfinder: WILLBRANDT, Ralph, 16515 Oranienburg (DE); JAHN, Steffen, 16761 Hennigsdorf (DE)
(74) Vertreter: Cohausz & Florack
(86) Internationale Anmeldenummer: PCT/EP2009/052229
(87) Internationale Veröffentlichungsnummer: WO 2009/106544

(56) Entgegenhaltungen:
- EP-A1- 1 886 892
- DE-C- 841 830
- JP-A- 2003 020 936
- US-A- 2 667 843
- MIKE BOGDANOFF: 'Low-emission locomotive projects', [Online] 13 Juli 2006, AQMD Gefunden im Internet: <URL:http://www.arb.ca.gov/railyard/ryagree ment/071306bogdanoff.pdf> [gefunden am 2012-09-20]

## Beschreibung

Die vorliegende Erfindung betrifft ein Schienenfahrzeug mit einem Fahrzeuggehäuse, das einen Fahrzeuginnenraum definiert, einem Verbrennungsmotor und einer mit dem Verbrennungsmotor verbundenen Abgasanlage zum Abführen der Abgase des Verbrennungsmotors, wobei die Abgasanlage eine Additivzufuhreinrichtung umfasst, die dazu ausgebildet ist, dem Abgasstrom des Verbrennungsmotors ein Additiv zur Schadstoffreduzierung zuzuführen, und die Additivzufuhreinrichtung einen Vorratsbehälter für das Additiv und einen damit verbundenen Zufuhrabschnitt zum Zuführen des Additivs zum Abgasstrom umfasst.

Bei Schienenfahrzeugen, die ihre Antriebsenergie über einen Verbrennungsmotor erzeugen, tritt nicht zuletzt wegen immer schärfer werdenden Vorschriften hinsichtlich der einzuhaltenden Emissionsgrenzwerte (unter anderem für Partikel und Stickoxide) der Aspekt der Abgasreinigung immer weiter in den Fokus der Entwicklungsaufgaben. So werden in der Europäischen Union seit 2006 stufenweise neue gesetzliche Abgasvorschriften (so genannte Stufe III a) mit strengen Grenzwerten für Neufahrzeuge eingeführt, die in 2012 durch noch strengere Grenzwerte (so genannte Stufe III b) abgelöst werden.

Um den Schadstoffgehalt der Abgase bei heutigen Dieselmotoren zu reduzieren, werden derzeit in der Regel zwei unterschiedliche Konzepte verfolgt, nämlich die Abgasrückführung (AGR) oder die selektive katalytische Reduktion (SCR), beide kombinierbar mit einem Partikelfilter.

Bei der selektiven katalytischen Reduktion (SCR) wird aus als Feststoff oder in wässriger Lösung gespeichertem Harnstoff zunächst Ammoniak (NH₃) und Kohlendioxid (CO₂) gewonnen, welche dann mit den Stickoxiden des Abgases vermischt und im SCR-Katalysator zu Stickstoff und Wasser umgewandelt werden. Hierbei zeichnet sich derzeit wegen der einfacheren Handhabung eine Tendenz zur Verwendung des Harnstoff-Wasser-Gemischs ab.

Die wässrige Harnstofflösung, die unter anderem unter dem Markennamen AdBlue® vertrieben wird, wird in einem entsprechenden Tank gespeichert und über entsprechende Komponenten der Additivzufuhreinrichtung in den heißen Abgasstrom eingedüst. Dort reduziert sie durch eine chemische Reaktion in den SCR-Katalysatoren den Stickoxyd-Anteil des Abgases. Die Nutztemperatur der Harnstofflösung ist dabei nach unten durch ihren Gefrierpunkt (-11°C) begrenzt. Nach oben ist die Nutztemperatur bzw. Lagertemperatur der Harnstofflösung durch die Temperatur begrenzt, bei der ein Zerfall der Harnstofflösung einsetzt.

Bisher wird diese Harnstofflösung vorwiegend bei Lastkraftwagen, Bussen und Personenkraftwagen eingesetzt, es sind jedoch auch schon Schienenfahrzeuge, wie beispielsweise die Triebwagen des Typs Regio-Shuttle RS1 der Firma Stadler Pankow GmbH, Berlin, DE, mit entsprechenden Einrichtungen zur Abgasreinigung konzipiert worden. Insbesondere bei Lastkraftwagen ist der Tank für die Harnstofflösung in der Regel motornah außerhalb des Fahrzeuggehäuses am Fahrzeugrahmen befestigt. Vergleichbares gilt für die SCR-Katalysatoren sowie die Zuleitungen vom Tank zu den SCR-Katalysatoren, die ebenfalls vergleichsweise ungeschützt außerhalb des Fahrzeuggehäuses angeordnet sind. Alle diese Komponenten der Additivzufuhreinrichtung sind damit unmittelbar und vergleichsweise ungeschützt jeglichen Umwelteinflüssen ausgesetzt.

Ein Beispiel eines Schienenfahrzeug mit einer solchen Einrichtung zur Abgasreinigung ist in EP 1 886 892-A-1 beschrieben.

In der Regel sind diese Komponenten der Additivzufuhreinrichtung sowohl der Umgebungstemperatur als auch Einflüssen aus dem Fahrbetrieb unterworfen, sodass sie in der Regel mit einer entsprechenden thermischen Isolierung und/oder einer Heizung/Kühlung versehen sein müssen sowie entsprechend robust gestaltet sein müssen, um den Umwelteinflüssen widerstehen zu können. Hierdurch wird eine vergleichsweise komplizierte Gestaltung der Komponenten der Additivzufuhreinrichtung bedingt.

Der vorliegenden Erfindung liegt daher die Aufgabe zu Grunde, ein Schienenfahrzeug der eingangs genannten Art zur Verfügung zu stellen, welches die oben genannten Nachteile nicht oder zumindest in geringerem Maße aufweist und insbesondere eine einfachere und kostengünstigere Gestaltung der Abgasanlage bzw. der Komponenten der Additivzufuhreinrichtung ermöglicht.

Die vorliegende Erfindung löst diese Aufgabe ausgehend von einem Schienenfahrzeug gemäß dem Oberbegriff des Anspruchs 1 durch die im kennzeichnenden Teil des Anspruchs 1 angegebenen Merkmale.

Der vorliegenden Erfindung liegt die technische Lehre zu Grunde, dass man eine einfache und kostengünstige Gestaltung der Abgasanlage bzw. der Additivzufuhreinrichtung ermöglicht, wenn der Vorratsbehälter in einer Gehäusekammer des Fahrzeuggehäuses angeordnet ist, wobei die Gehäusekammer zumindest in den an den Fahrzeuginnenraum und den an die Umgebung des Fahrzeugs angrenzenden Bereichen, die von Passagieren frequentiert werden, mit einer Wärmeisolierung versehen ist.

Durch ihre Anordnung in der Gehäusekammer ist es möglich, die betreffenden Komponenten der Additivzufuhreinrichtung bzw. der Abgasanlage selbst vergleichsweise einfach und lediglich entsprechend der jeweils geforderten Kernfunktion (also optimales Speichern bzw. optimale Zufuhr des Additivs bzw. optimale Abgasreinigung) zu gestalten, da die Schutzfunktion vor Umwelteinflüssen (wie thermischen und/oder mechanischen Einflüssen) durch die Wandungen der betreffenden Gehäusekammer übernommen werden können. Diese Wandungen der betreffenden Gehäusekammer können selbst wiederum vergleichsweise einfach und kostengünstig gestaltet sein, da sie lediglich die betreffende Schutzfunktion zur Verfügung stellen müssen.

Die einfach zu gestaltende Wärmeisolierung in den Bereichen, die an von Passagieren frequentierte Bereiche angrenzen, stellt dabei natürlich nicht nur den Schutz der betreffenden Komponente vor Umwelteinflüssen sicher. Vielmehr werden auch die Passagiere, die sich im Innern oder außerhalb des Fahrzeugs aufhalten, in einfacher Weise wirkungsvoll vor einer Beeinträchtigung ( Hitze) durch die betreffenden Komponenten der Additivzufuhreinrichtung geschützt.

Gemäß einem Aspekt betrifft die vorliegende Erfindung daher ein Schienenfahrzeug mit einem Fahrzeuggehäuse, das einen Fahrzeuginnenraum definiert, einem Verbrennungsmotor und einer mit dem Verbrennungsmotor verbundenen Abgasanlage zum Abführen der Abgase des Verbrennungsmotors, wobei die Abgasanlage eine Additivzufuhreinrichtung umfasst, die dazu ausgebildet ist, dem Abgasstrom des Verbrennungsmotors ein Additiv zur Schadstoffreduzierung zuzuführen, und die Additivzufuhreinrichtung einen Vorratsbehälter für das Additiv und einen damit verbundenen Zufuhrabschnitt zum Zuführen des Additivs zum Abgasstrom umfasst. Der Vorratsbehälter ein ist in einer Gehäusekammer des Fahrzeuggehäuses angeordnet, wobei die wenigstens eine Gehäusekammer zumindest in den an den Fahrzeuginnenraum und den an die Umgebung des Fahrzeugs angrenzenden Bereichen, die von Passagieren frequentiert werden, mit einer Wärmeisolierung versehen ist.

Der Zufuhrabschnitt kann grundsätzlich in beliebiger geeigneter Weise gestaltet sein. Insbesondere kann er beliebige geeignete Komponenten zur Reinigung bzw. Schadstoffreduzierung der Abgase der Verbrennungskraftmaschine umfassen. Bei bevorzugten Varianten der Erfindung kann der Zufuhrabschnitt-wenigstens einen Katalysator zur Schadstoffreduzierung, insbesondere einen SCR-Katalysator, umfassen.

Das Additiv kann in Form von beliebigen End-, Zwischen oder Vorprodukten und dabei wiederum in beliebigen Aggregatszuständen (beispielsweise fest, flüssig oder gasförmig) vorgehalten werden. Bei einem Vorhalten in Form eines Vor- oder Zwischenprodukts umfasst der Zufuhrabschnitt dann eine entsprechende Aufbereitungseinrichtung, welche das Additiv in seinem für die Zufuhr zum Abgasstrom erforderlichen Zustand zur Verfügung stellt.

Bevorzugt ist jedoch vorgesehen, dass der Vorratsbehälter ein Tank ist, in dem das Additiv in flüssiger Form vorgehalten ist, da bei dieser Variante eine mehr oder weniger komplizierte Aufbereitung in der Regel entfallen kann. Wegen seiner einfachen Verfügbarkeit und unkomplizierten Handhabung wird als Additiv vorzugsweise eine wässrige Harnstofflösung, insbesondere eine 32,5%ige Harnstofflösung, verwendet.

Bei dem erfindungsgemäßen Schienenfahrzeug ist bevorzugt eine Temperiereinrichtung zum Temperieren des Additivs vorgesehen, wobei die Temperiereinrichtung zum Temperieren von wenigstens einer Komponente des Vorratsbehälters und/oder von wenigstens einer Komponente der das Additiv von dem Tank zu dem Zufuhrabschnitt führenden Leitungen und/oder von wenigstens einer Komponente des Zufuhrabschnitts ausgebildet ist. Hierdurch ist es zum einen möglich, das Additiv zu jedem Betriebszeitpunkt (beispielsweise auch nach einem längeren Stillstand bei Temperaturen unterhalb des Nutztemperaturbereichs des Additivs) zumindest schon nach kurzer Aufwärmzeit wieder zur Schadstoffreduktion zu nutzen. Ebenso kann eine Unbrauchbarmachung des Additivs durch zumindest längerfristig zu hohe Lager- bzw. Gebrauchstemperaturen verhindert werden.

Es versteht sich jedoch, dass bei anderen Varianten des erfindungsgemäßen Schienenfahrzeugs eine solche aktive Kühlung und/oder Heizung aber auch fehlen kann, da beispielsweise im Fall eines Starts nach einem längeren Stillstand bei Temperaturen unterhalb des Nutztemperaturbereichs des Additivs akzeptiert werden kann, dass das Additiv erst nach einem längeren Zeitraum (bis zum Erreichen des Nutztemperaturbereichs des Additivs) zur Verfügung steht.

Die Temperiereinrichtung kann grundsätzlich auf beliebige geeignete Weise gestaltet sein, solange eine ausreichend zügige Herstellung der gewünschten Temperaturverteilung im Additiv gewährleistet ist. Bevorzugt umfasst die Temperiereinrichtung eine elektrisch betriebene Heizleitung und/oder eine von einem Kühlmittelkreislauf des Verbrennungsmotors gespeiste Heizleitung, da diese Varianten besonders einfach zu realisieren sind.

Besonders vorteilhafte Varianten des erfindungsgemäßen Schienenfahrzeugs zeichnen sich dadurch aus, dass die Temperiereinrichtung wenigstens eine Kühleinrichtung umfasst, die das Additiv auch bei hohen Umgebungstemperaturen in seinem Nutztemperaturbereich hält und so eine Unbrauchbarmachung durch zu hohe Temperaturen verhindert.

Auch die Kühleinrichtung kann grundsätzlich auf beliebige geeignete Weise gestaltet sein, sofern eine ausreichend zuverlässige Einhaltung eines (unterhalb der Zersetzungstemperatur liegenden) oberen Grenzwertes für die Temperatur im Additiv gewährleistet ist. Vorzugsweise ist dabei eine Mehrfachnutzung von Komponenten des Fahrzeugs vorgesehen, um das Fahrzeug insgesamt so einfach und kostengünstig wie möglich zu gestalten. Hierbei können aktive Komponenten (Lüfter, Wärmetauscher, Kompressoren, aktive Blenden etc.) und/oder passive Komponenten (Kühlkanäle, Kühlmittelleitungen, passive Blenden etc.) von Kühleinrichtungen für andere Komponenten oder Teile des Fahrzeugs (insbesondere Teile einer Klimaanlage des Fahrzeugs oder dergleichen) genutzt werden. Vorzugsweise umfasst die Kühleinrichtung wenigstens einen Ventilator einer Kühlvorrichtung des Verbrennungsmotors, da dieser in der Regel einen ausreichenden Luftstrom zur Verfügung stellt.

Besonders günstig ist es jedoch, wenn der Vorratsbehälter dem Verbrennungsmotor benachbart angeordnet ist. Hierdurch kann zumindest in dem Vorratsbehälter in einfacher Weise dank der Abwärme des Motors ein schnelles Abkühlen des Additivs bei Teillastbetrieb oder insbesondere nach dem Abstellen des Verbrennungsmotors verhindert werden, ohne dass eine zusätzliche Heizeinrichtung betrieben werden muss.

Erfindungsgemäß wird der Vorratsbehälter in einer ersten Gehäusekammer angeordnet, wobei die erste Gehäusekammer den Motorraum für den Verbrennungsmotor bildet. Hierdurch kann zum einen in einfacher Weise die soeben beschriebene Nutzung der Abwärme des Motors erreicht werden. Zum anderen kann die in der Regel ohnehin vorhandene Isolierung des Motorraumes (typischerweise eine möglichst vollständige Kapselung des Motorraumes) auch die Funktion der Isolierung des Vorratsbehälters übernehmen, sodass hierfür keine separate Isolierung vorgesehen werden muss. Vorzugsweise ist die erste Gehäusekammer daher gegenüber ihrer Umgebung im Wesentlichen vollständig mit einer Schallisolierung und/oder einer Wärmeisolierung versehen.

Die erste Gehäusekammer kann grundsätzlich an beliebiger geeigneter Stelle (in Längs-, Quer- und/der Höhenrichtung) im Schienenfahrzeug angeordnet sein. Insbesondere kann sie im Dachbereich ebenso wie auf Höhe des Passagierbereichs angeordnet sein. Besonders günstig ist eine Anordnung unterflur, da in diesem.Fall eine einfache Befüllung des Vorratsbehälters möglich ist. Vorzugsweise definiert das Fahrzeuggehäuse daher im Fahrzeuginnenraum ein Fußbodenniveau für Passagiere, und die erste Gehäusekammer ist unterhalb des Fußbodenniveaus angeordnet.

Der Zufuhrabschnitt, der Katalysator zur Schadstoffreduzierung und der Vorratsbehälter können in derselben Gehäusekammer angeordnet sein. Vorzugsweise ist jedoch vorgesehen, dass der Zufuhrabschnitt und/oder der Katalysator zur Schadstoffreduzierung in einer separaten zweiten Gehäusekammer angeordnet ist. Hierdurch vereinfacht sich zum einen die Gestaltung der jeweiligen Gehäusekammer. Zudem wird eine größere Gestaltungsfreiheit, insbesondere bei der Anordnung des Zufuhrabschnitts bzw. des Katalysators zur Schadstoffreduzierung erreicht.

Auch die zweite Gehäusekammer kann grundsätzlich an beliebiger geeigneter Stelle (in Längs-, Quer- und/der Höhenrichtung) im Schienenfahrzeug angeordnet sein. Insbesondere kann sie im Dachbereich ebenso wie auf Höhe des Passagierbereichs oder unterflur angeordnet sein. Besonders günstig ist eine Anordnung der zweiten Gehäusekammer im Bereich einer Seitenwand und/oder einer Stirnwand des Fahrzeuggehäuses, da sie sich dort (nicht zuletzt wegen ihrer in der Regel langgestreckten Gestaltung) besonders einfach und Platz sparend integrieren lässt.

Besonders einfach und unauffällig lässt sich eine solche Integration realisieren, wenn die zweite Gehäusekammer einen säulenartigen Abschnitt im Innenraum des Fahrzeuggehäuses definiert, da derartige säulenartige Abschnitte ohnehin häufig im Innenraum von Schienenfahrzeugen vorgesehen sind und sich problemlos in ohnehin nicht zum Transport von Passagieren benötigten Bereichen anordnen lassen. Besonders unauffällig ist eine Integration der zweiten Gehäusekammer im Bereich einer Türöffnung des Fahrzeuggehäuses zu realisieren.

Wie später noch im Detail erläutert wird, ist es insbesondere im Hinblick auf eine einfache Temperierung des Zufuhrabschnitts bzw. des Katalysators zur Schadstoffreduzierung von Vorteil, wenn sich der Zufuhrabschnitt bzw. der Katalysator zur Schadstoffreduzierung und damit auch die zweite Gehäusekammer primär in Höhenrichtung des Schienenfahrzeugs erstreckt. Vorzugsweise ist daher vorgesehen, dass sich die zweite Gehäusekammer in Höhenrichtung des Fahrzeuggehäuses über wenigstens 50% der Höhe des Fahrzeuggehäuses erstreckt. Bevorzugt weist der Fahrzeuginnenraum einen Passagierraum auf und die zweite Gehäusekammer erstreckt sich in Höhenrichtung des Fahrzeuggehäuses über die Höhe des Passagierraums. Hiermit lässt sich innerhalb der zweiten Gehäusekammer in besonders einfacher Weise eine für eine gewünschte Temperierung (Heizung und/oder Kühlung) günstige Konvektion erzielen. Hierbei kann es sich um eine natürliche Konvektion und/oder eine durch entsprechende aktive (Lüfter etc.) und/oder passive Einrichtungen (den Fahrtwind nutzende Leitbleche, düsenförmige Abschnitte etc.) erzwungene Konvektion handeln.

Bei vorteilhaften Varianten des erfindungsgemäßen Schienenfahrzeugs ist daher vorgesehen, dass der Zufuhrabschnitt bzw. der Katalysator zur Schadstoffreduzierung langgestreckt ausgebildet ist, wobei der Zufuhrabschnitt bzw. der Katalysator zur Schadstoffreduzierung eine Längsachse definiert, die in Höhenrichtung des Fahrzeuggehäuses ausgerichtet ist. Vorzugsweise ist eine Konvektionseinrichtung zur Erzeugung einer den Zufuhrabschnitt bzw. den Katalysator zur Schadstoffreduzierung kühlenden Konvektion in der zweiten Gehäusekammer vorgesehen. Um eine besonders einfache Temperierung des Zufuhrabschnitts bzw. des Katalysators zur Schadstoffreduzierung ohne weitere (insbesondere aktive) Hilfsmittel realisieren zu können, umfasst die Konvektionseinrichtung einen zwischen dem Zufuhrabschnitt und der Wandung der zweiten Gehäusekammer ausgebildeten freien Strömungsquerschnitt, wobei der freie Strömungsquerschnitt derart bemessen ist, dass sich im Betrieb des Fahrzeugs eine zur alleinigen Kühlung des Zufuhrabschnitts ausreichende natürliche Konvektion einstellt.

Um die Temperierung des Zufuhrabschnitts bzw. des Katalysators zur Schadstoffreduzierung über eine entsprechende erzwungene und/oder natürliche Konvektion in besonders einfacher Weise realisieren zu können, ist vorzugsweise vorgesehen, dass die zweite Gehäusekammer wenigstens eine Entlüftungsöffnung aufweist und vorzugsweise auch wenigstens eine Belüftungsöffnung aufweist, sodass sich die Konvektion einstellen kann, ohne dass größere Strömungswiderstände überwunden werden müssen. Hierbei ist es besonders günstig, wenn die Entlüftungsöffnung im Bereich eines oberen Endes der zweiten Gehäusekammer angeordnet ist, während die Belüftungsöffnung im Bereich eines unteren Endes der zweiten Gehäusekammer angeordnet ist.

Weitere bevorzugte Ausgestaltungen der Erfindung ergeben sich aus den Unteransprüchen bzw. der nachstehenden Beschreibung bevorzugter Ausführungsbeispiele, welche auf die beigefügten Zeichnungen Bezug nimmt. Es zeigen:
- Figur 1: eine schematische Schnittansicht einer bevorzugten Ausführungsform des erfindungsgemäßen Fahrzeugs;
- Figur 2: eine schematische perspektivische Ansicht eines Teils des Fahrzeugs aus Figur 1;
- Figur 3: eine schematische Schnittansicht einer weiteren bevorzugten Ausführungsform des erfindungsgemäßen Fahrzeugs;
- Figur 4: eine schematische perspektivische Ansicht eines Teils des Fahrzeugs aus Figur 3.

### Erstes Ausführungsbeispiel

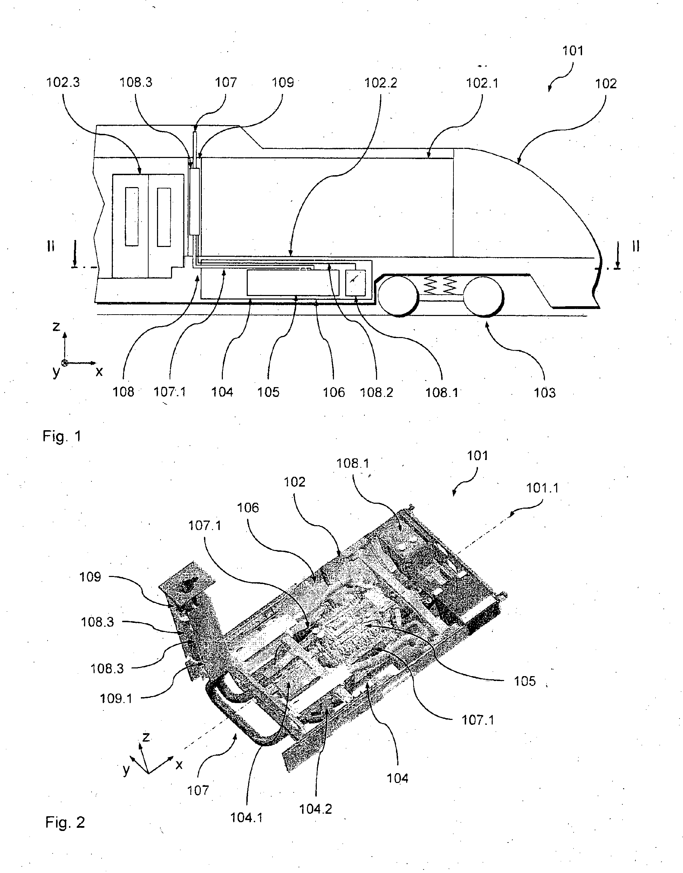

Im Folgenden wird unter Bezugnahme auf die Figuren 1 und 2 ein erstes bevorzugtes Ausführungsbeispiel des erfindungsgemäßen Schienenfahrzeugs 101 beschrieben. Zum einfacheren Verständnis der nachfolgenden Erläuterungen ist in den Figuren 1 und 2 ein Koordinatensystem angegeben, in dem die x-Koordinate die Längsrichtung des Schienenfahrzeugs 101, die y-Koordinate die Querrichtung des Schienenfahrzeugs 101 und die z-Koordinate die Höhenrichtung des Schienenfahrzeugs 101 bezeichnen.

Die Figur 1 zeigt eine schematische Seitenansicht eines Teils des Fahrzeugs 101, welches eine Fahrzeuglängsachse 101.1 aufweist. Das Fahrzeug 101 umfasst ein Fahrzeuggehäuse in Form eines Wagenkastens 102, der an seinem vorderen Ende auf einem Fahrwerk in Form eines Drehgestells 103 abgestützt ist. Das (in Figur 1 nicht dargestellte) andere Ende des Wagenkastens 102 ist auf einem weiteren Fahrwerk, beispielsweise einem weiteren Drehgestell abgestützt.

Der Wagenkasten 102 definiert einen Fahrzeuginnenraum 102.1, der zur Beförderung von Passagieren dient. Der Fahrzeuginnenraum 102.1 weist dabei einen Fußboden 102.2 auf, der wiederum ein Fußbodenniveau definiert. In Längsrichtung des Fahrzeugs 101 ist hinter dem Drehgestell 103 eine Antriebseinheit 104 mit einem Verbrennungsmotor in Form eines Dieselmotors 105 angeordnet.

Der Dieselmotor 105 kann über ein hydrodynamisches bzw. hydromechanisches Getriebe mit nachgeschalteter Gelenkwelle direkt mit den Radsatzgetrieben der angetriebenen Räder der Triebdrehgestelle des Fahrzeugs 101 verbunden sein. Im vorliegenden Beispiel treibt der Dieselmotor 105 jedoch einen Generator 104.1 an, der dann die Antriebsenergie für die elektrischen Fahrmotoren der Triebdrehgestelle des Fahrzeugs 101 zur Verfügung stellt.

Die Antriebseinheit 104 ist unterflur in einer ersten Gehäusekammer 106 des Wagenkastens 102 unterhalb des Fußbodenniveaus angeordnet. Diese erste Gehäusekammer 106 (die in Figur 2 auf Höhe der Linie II-II aus Figur 1 aufgeschnitten dargestellt ist) ist bis auf die notwendigen Belüftungsöffnungen und Entlüftungsöffnungen rundum mit einer Schallisolierung und einer Wärmeisolierung versehen, um den durch die erste Gehäusekammer 106 definierten Motorraum gegenüber der Umgebung, insbesondere gegenüber den von Passagieren bzw. Passanten frequentierten Bereichen innerhalb oder außerhalb des Fahrzeugs 101 abzuschirmen bzw. abzukapseln. Gegebenenfalls sind auch die Belüftungsöffnungen und Entlüftungsöffnungen so angeordnet und gestaltet, dass eine möglichst geringe Schallemission aus dem Motorraum 106 erzielt wird.

Durch diese Kapselung des Motorraums 106 wird erreicht, dass Passagiere im Innern des Fahrzeugs und Personen außerhalb des Fahrzeugs zum einen einer möglichst geringen Lärmbelästigung durch das Fahrzeug ausgesetzt sind. Ebenso wird hierdurch erreicht, dass diese Personen keinen übermäßigen Beeinträchtigungen durch die Wärmeabstrahlung des Dieselmotors ausgesetzt sind.

Es versteht sich hierbei zum einen, dass die Schallisolierung und die Wärmeisolierung durch dieselben Bauteile realisiert sein können. Ebenso versteht es sich, dass nur diejenigen Bereiche des Motorraums mit einer entsprechenden Isolierung versehen sein können, welche an die Bereiche angrenzen, die im Normalbetrieb des Fahrzeugs von Personen innerhalb und außerhalb des Fahrzeugs 101 im Normalbetrieb frequentiert werden. Insbesondere kann also vorgesehen sein, dass die den Schienen zugewandte Unterseite des Motorraums, in deren Bereich sich im Normalbetrieb des Fahrzeugs (beispielsweise im Linienbetrieb) keine Personen aufhalten, lediglich mit einer entsprechenden Abdeckung verschlossen, aber nicht mit einer gesonderten Isolierung versehen ist.

Der Dieselmotor 105 ist mit einer Abgasanlage 107 verbunden, welche die Abgase des Dieselmotors 105 in die Umgebung des Fahrzeugs 101 abführt. Die Abgasanlage 107 umfasst je Zylinderbank des Dieselmotors 105 eine Abgasleitung 107.1, über welche das Abgas abgeführt wird. In diese Abgasleitungen 107.1 können jeweils ein oder mehrere Partikelfilter geschaltet sein, um Partikel aus dem Abgas herauszufiltern.

Weiterhin ist in jede Abgasleitung 107.1 ein Zufuhrabschnitt einer Additivzufuhreinrichtung 108 geschaltet. Die Additivzufuhreinrichtung führt dem Abgasstrom ein Additiv zu, welches in einer katalytischen Reaktion, beispielsweise einer so genannten selektiven katalytischen Reduktion (SCR), die Stickoxide (NOₓ) in dem Abgas zu Stickstoff und Wasser umwandelt.

Hierzu umfasst die Additivzufuhreinrichtung 108 einen Vorratsbehälter in Form eines Tanks 108.1, in dem das Additiv eine in flüssiger Form vorgehalten wird. Bei dem Additiv kann es sich um eine Harnstofflösung (beispielsweise eine 32,5%ige Harnstofflösung, wie sie häufig unter dem Markennamen AdBlue® vertrieben wird) handeln. Es versteht sich jedoch, dass bei anderen Varianten der Erfindung auch Additive anderer Zusammensetzung und/oder anderen Aggregatszustands (beispielsweise in Form eines Feststoffs oder Gases) verwendet werden können, über deren Zugabe zum Abgas (die gegebenenfalls erst nach einer geeigneten Aufbereitung erfolgt) eine entsprechende Reinigung des Abgases, insbesondere eine entsprechende Reduktion des Stickoxidanteils im Abgas, erzielt werden kann.

Im vorliegenden Beispiel wird das Additiv aus dem Tank 108.1 über eine oder mehrere Zufuhrleitungen 108.2 zu dem jeweiligen Zufuhrabschnitt in Form eines Katalysators 108.3 gefördert. Vor dem oder im Bereich des Katalysators 108.3 wird dann ein Teil des Additivs über Einspritzdüsen zerstäubt und dem Abgas zugeführt, sodass die oben beschriebene katalytische Reduktion und die daraus resultierende Stickoxidreduzierung ablaufen kann, bevor das gereinigte Abgas im Dachbereich des Wagenkastens 102 an die Umgebung abgegeben wird. Der nicht eingespritzte Teil des Additivs dient zur Kühlung der Einspritzdüsen und wird in den Tank 108.1 zurückgeführt. Dort kann er in bestimmten Betriebssituationen (Warmlaufphase etc.) unter anderem zur Temperierung des Additivs dienen.

Wie bereits eingangs erwähnt, ist die Nutztemperatur des Additivs nach unten durch ihren Gefrierpunkt begrenzt (beim Beispiel der 32,5%igen Harnstofflösung liegt der Gefrierpunkt etwa bei -11 °C). Nach oben ist die Nutztemperatur bzw. Lagertemperatur des Additivs durch die Temperatur begrenzt, bei der ein Zerfall des Additivs einsetzt. Dies hat zur Konsequenz, dass eine Temperierung des Additivs erfolgen muss, um die Einhaltung dieses Nutztemperaturbereichs zu gewährleisten. Mit der vorliegenden Erfindung ist es jedoch möglich, den Aufwand hierfür gering zu halten.

So hat die Anordnung des Tanks 108.1 für das Additiv innerhalb des Motorraums 106 den Vorteil, dass eine gesonderte Wärmeisolation für den Tank 108.1 entfallen kann, da diese Funktion bereits von der Isolation des Motorraums 106 übernommen werden kann. Gegebenenfalls kann es in den oben beschriebenen Fällen, in denen die Unterseite des Motorraums nicht mit einer solchen Isolation versehen ist, lediglich erforderlich sein, eine einfache (beispielsweise plattenförmige) Isolation auf der Unterseite des Tanks vorzusehen. Die Isolation des Motorraums 106 kann zudem einfacher gestaltet sein als eine separate Isolation des Tanks, da schon der Luftraum zwischen dem Tank 106 und der Wandung des Motorraums 106 zur Wärmeisolation beiträgt.

Die Anordnung des Tanks 108.1 sowie eines Großteils der Zufuhrleitungen 108.2 in dem isolierten Motorraum 106 in der Nähe des Dieselmotors 105 hat weiterhin den Vorteil, dass die Abwärme des Dieselmotors 105 sowie der Abgasleitungen 107.1 in einfacher Weise (gegebenenfalls sogar ohne weitere Hilfsmittel) zur Temperierung des Additivs genutzt werden kann. So kann diese dank der Isolierung nur langsam aus dem Motorraum 106 abgeführte Abwärme bei geringer Motorlast oder sogar nach dem Abstellen des Dieselmotors 105 (dank der Isolation des Motorraums 106) auch bei niedrigen Außentemperaturen noch lange für eine Temperatur oberhalb des Gefrierpunkts des Additivs in den Tank 108.1 und den im Motorraum 106 verlaufenden Teilen der Zufuhrleitungen 108.2 sorgen.

Um diesen Effekt zu verstärken, kann in diesen Betriebssituationen (z. B. Schwachlast, Leerlauf, abgestellter Dieselmotor 105 etc.) vorgesehen sein, dass eine Kühlvorrichtung (Lüfter etc.) für den Dieselmotor 105 nicht oder nur mit verminderter Kühlleistung betrieben wird.

Weiterhin ist durch diese Anordnung im isolierten Motorraum 106 und damit die Nutzung der Abwärme des Dieselmotors 105 gewährleistet, dass selbst bei einem Unterschreiten des Gefrierpunkts des Additivs (beispielsweise bei einer langen Ruhezeit bei sehr tiefen Umgebungstemperaturen) schon nach vergleichsweise kurzer Zeit wieder der Nutztemperaturbereich des Additivs erreicht wird, sodass zusätzliche Heizeinrichtungen für das Additiv entsprechend klein dimensioniert sein können oder gegebenenfalls sogar entfallen können (wenn beispielsweise eine verminderte Abgasreinigung während der Warmlaufphase des Fahrzeugs akzeptabel ist).

Die Zufuhrleitung 108.2 wird weit gehend in der Nähe der Abgasleitung 107.1 geführt, um in einfacher Weise über die Wärmeabgabe der Abgasleitung 107.1 eine geeignete Temperierung des Additivs in der Zufuhrleitung 108.2 zu gewährleisten, sodass auch hier zusätzliche Heizeinrichtungen für das Additiv entsprechend klein dimensioniert sein können oder gegebenenfalls sogar entfallen können.

In diesem Zusammenhang ist es weiterhin von Vorteil, dass der Tank 108.1 und die Zufuhrleitung 108.2 durch die Anordnung im Motorraum 106 vor dem Fahrtwind geschützt ist, der andernfalls das Erreichen des Nutztemperaturbereichs verzögert.

Im vorliegenden Beispiel sind im Bereich der Ansaugöffnung des Tanks 108.1 und im Bereich der Zufuhrleitungen 108.2 zusätzliche Heizeinrichtungen vorgesehen, um in jedem Betriebszustand die Verfügbarkeit des Additivs und damit der Abgasreinigung zu gewährleisten. Die zusätzlichen Heizeinrichtungen können einfache elektrische Heizeinrichtungen sein. Ebenso kann es sich um Leitungen handeln, in denen ein Teil des Kühlmittels aus einem Kühlmittelkreislauf des Dieselmotors 105 zirkuliert.

Ein weiterer Vorteil der Anordnung des Tanks 108.1 und der Zufuhrleitung 108.2 innerhalb des Motorraums 106 liegt darin, dass im Hinblick auf eine möglicherweise erforderliche Kühlung des Additivs in einfacher Weise ein gegebenenfalls ohnehin für den Dieselmotor 105 sowie andere Komponenten der Antriebseinrichtung 104 zur Verfügung zu stellender Kühlluftstrom auch für die Kühlung des Additivs genutzt werden kann. Hierdurch ist mit anderen Worten eine wirtschaftliche Mehrfachnutzung von solchen Kühlvorrichtungen (z. B des Lüfters 104.2 etc.) möglich.

Schließlich ist die Anordnung des Tanks 108.1 und der Zufuhrleitung 108.2 innerhalb des Motorraums 106 dahingehend von Vorteil, dass sie hierdurch in einfacher Weise. vor mechanischen Einflüssen (wie beispielsweise Steinschlag oder dergleichen) geschützt sind.

Die dem Dieselmotor 105 nachgeschalteten Katalysatoren 108.3 sind als langgestreckte Einheiten ausgebildet, die in Höhenrichtung des Fahrzeugs 101 bzw. des Wagenkastens 102 ausgerichtet sind. Die Katalysatoren 108.3 sind in einer säulenartigen zweiten Gehäusekammer 109 angeordnet, die im Bereich einer Tür 102.3 des Wagenkastens 102 in eine Seitenwand des Wagenkastens 102 integriert ist.

Diese Integration in eine Seitenwand des Wagenkastens 102 im Bereich der Tür 102.3 ist insoweit von Vorteil, als die dadurch entstehende Säule im Passagierraum 102.1 zum einen die Bewegungsfreiheit der Passagiere höchstens in geringem Maße einschränkt und zudem auch unter optischen Gesichtspunkten als wenig störend empfunden wird. Ein weiterer Vorteil liegt darin, dass die Abwärme der in der zweiten Gehäusekammer 109 verlaufenden Komponenten der Abgasanlage 107 genutzt werden kann, auch bei niedrigen Außentemperaturen die Funktion der Komponenten der Tür 102.3 sicherzustellen.

Die zweite Gehäusekammer 109 erstreckt sich über mehr als 50% der Höhenabmessung des Wagenkastens 102 und damit vollständig durch den Passagierraum 102.1 hindurch, sodass sie im Passagierraum 102.1 alls Türsäule wahrgenommen wird. Die zweite Gehäusekammer 109 ist an ihren vertikalen Seitenwänden mit einer Schallisolierung und einer Wärmeisolierung versehen, sodass Passagiere im Passagierraum 102.1 sowie Passanten außerhalb des Fahrzeugs 101 weder durch die Schallemission noch durch die Wärmeabgabe der Abgasleitungen 107.1 und der Katalysatoren 108.3 übermäßig beeinträchtigt werden. Schallisolierung und Wärmeisolierung können wiederum gegebenenfalls in einer Einheit realisiert sein.

Auch hier hat die Anordnung der Katalysatoren 108.3 und des übrigen Teils der Zufuhrleitungen 108.2 innerhalb der zweiten Gehäusekammer 109 den Vorteil, dass eine kompliziert gestaltete gesonderte Wärmeisolation für diese Komponenten entfallen kann, da diese Funktion bereits von der besonders einfach zu gestaltenden Isolation der zweiten Gehäusekammer 109 übernommen werden kann. Diese kann zudem einfacher gestaltet sein, da schon der Luftraum zwischen den Komponenten der Abgasanlage 107 bzw. den Katalysatoren 108.3 und der Wandung der zweiten Gehäusekammer 109 zur Wärmeisolation beiträgt.

Die Anordnung der Katalysatoren 108.3 und des übrigen Teils der Zufuhrleitungen 108.2 innerhalb der zweiten Gehäusekammer 109 hat weiterhin den Vorteil, dass die Abwärme der Abgasleitungen 107.1 in einfacher Weise (gegebenenfalls sogar ohne weitere Hilfsmittel) zur Temperierung des Additivs bei niedrigen Umgebungstemperaturen genutzt werden kann.

Hierbei ist insbesondere die vertikale Ausrichtung der Abgasleitungen 107.1, der Katalysatoren 108.3 und des übrigen Teils der Zufuhrleitungen 108.2 von Vorteil, da sich hierdurch in der zweiten Gehäusekammer 109 (ähnlich wie in einem Kamin) eine günstige natürliche Konvektion einstellen kann, welche den Wärmeübergang begünstigt.

Um diese natürliche Konvektion noch weiter zu begünstigen und bei Bedarf gegebenenfalls auch eine Kühlwirkung durch zugeführte Umgebungsluft zu erzielen, weist die zweite Gehäusekammer 109 an ihrem unteren Ende eine Belüftungsöffnung sowie an ihrem oberen Ende eine Entlüftungsöffnung auf, sodass sich die vertikale Luftströmung in der zweiten Gehäusekammer 109 ungehindert ausbilden kann, wobei auch ein Anteil an Umgebungsluft mitgeführt wird. Die Belüftungsöffnung sowie die Entlüftungsöffnung können beispielsweise jeweils außen in der Seitenwand des Wagenkastens 102 und/oder im Untergestell bzw. im Dachbereich des Wagenkastens 102 vorgesehen sein.

Weiterhin ist zur Begünstigung einer zur erforderlichen Kühlung und/oder Erwärmung des Additivs ausreichenden natürlichen Konvektion vorgesehen, dass der freie Strömungsquerschnitt in der zweiten Gehäusekammer 109, insbesondere zwischen den Katalysatoren 108.3 und der Wandung der zweiten Gehäusekammer 109, derart bemessen ist, dass sich im Betrieb des Fahrzeugs 101 eine zur alleinigen Kühlung des Zufuhrabschnitts ausreichende natürliche Konvektion einstellt.

Es versteht sich jedoch, dass bei anderen Varianten der Erfindung auch aktive Einrichtungen (Lüfter etc.) und/oder passive Einrichtungen (den Fahrtwind in die zweite Gehäusekammer lenkende Leitbleche, düsenförmige Abschnitte etc.) vorgesehen sein können, die eine erzwungene Konvektion in der zweiten Gehäusekammer bewirken.

Auch im Bereich der zweiten Gehäusekammer 109 kann die Abwärme der Abgasleitungen 107.1 bzw. der Katalysatoren 108.3 nach dem Abstellen des Dieselmotors 105 (dank der Isolation der zweiten Gehäusekammer 109) auch bei niedrigen Außentemperaturen noch lange für eine Temperatur oberhalb des Gefrierpunkts des Additivs in den in der zweiten Gehäusekammer 109 verlaufenden Teilen der Zufuhrleitungen 108.2 sorgen.

Weiterhin ist durch diese Anordnung in der isolierten zweiten Gehäusekammer 109 und damit die Nutzung der Abwärme der Abgasleitungen 107.1 bzw. der Katalysatoren 108.3 gewährleistet, dass selbst bei einem Unterschreiten des Gefrierpunkts des Additivs schon nach vergleichsweise kurzer Zeit wieder der Nutztemperaturbereich des Additivs erreicht wird, sodass zusätzliche Heizeinrichtungen für das Additiv entsprechend klein dimensioniert sein können oder gegebenenfalls sogar entfallen können (wenn beispielsweise eine verminderte Abgasreinigung während der Warmlaufphase des Fahrzeugs akzeptabel ist).

Die Zufuhrleitung 108.2 wird auch im Bereich der zweiten Gehäusekammer 109 weit gehend in der Nähe der Abgasleitung 107.1 geführt, um in einfacher Weise über die Wärmeabgabe der Abgasleitung 107.1 eine geeignete Temperierung des Additivs in der Zufuhrleitung 108.2 zu gewährleisten, sodass auch hier zusätzliche Heizeinrichtungen für das Additiv entsprechend klein dimensioniert sein können oder gegebenenfalls sogar entfallen können.

In diesem Zusammenhang ist es weiterhin von Vorteil, dass die Zufuhrleitung 108.2 durch die Anordnung in der zweiten Gehäusekammer 109 vor dem Fahrtwind geschützt ist, der andernfalls das Erreichen des Nutztemperaturbereichs verzögern würde.

Schließlich ist die Anordnung der Zufuhrleitung 108.2 innerhalb der zweiten Gehäusekammer 109 dahingehend von Vorteil, dass sie hierdurch in einfacher Weise vor mechanischen Einflüssen (wie beispielsweise Steinschlag oder dergleichen) geschützt sind.

Es sei dieser Stelle noch erwähnt, dass die Anordnung des Tanks 108.1 unterflur im Hinblick auf eine einfache Befüllung des Tanks 108.1 und der Gestaltung des Einfüllstutzens bzw. der Einfüllleitung von Vorteil ist. So kann der Einfüllstutzen für den Tank 108.1 einfach auf der Höhe der Oberkante des Tanks 108.1 in der Seitenwand des Wagenkastens 102 und damit auf einem einfach zugänglichen Niveau angeordnet sein. Zudem erübrigt sich hierdurch eine komplizierte Gestaltung des Einfüllstutzens bzw. der Einfüllleitung.

### Zweites Ausführungsbeispiel

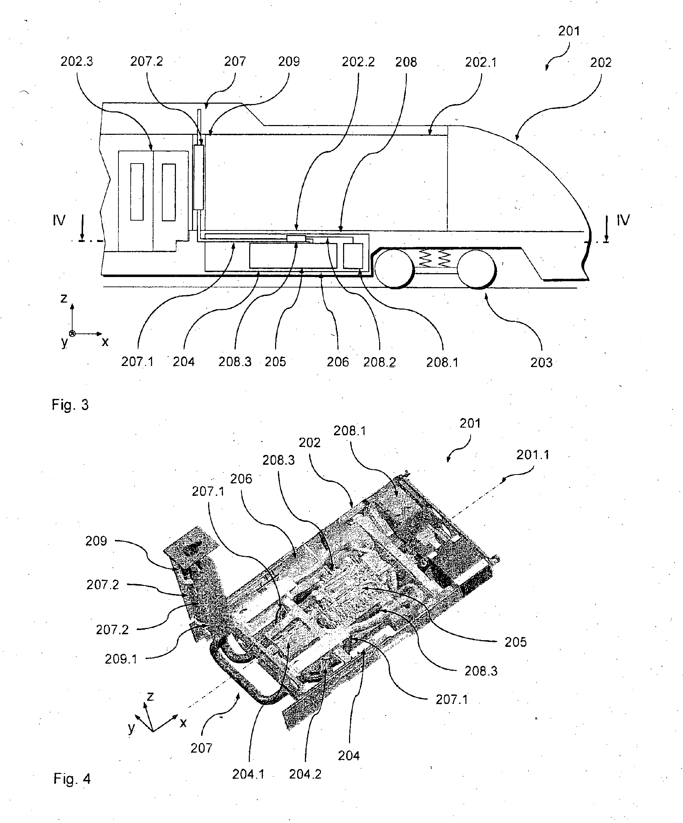

Im Folgenden wird unter Bezugnahme auf die Figuren 3 und 4 ein weiteres bevorzugtes Ausführungsbeispiel des erfindungsgemäßen Schienenfahrzeugs 201 beschrieben. Das Schienenfahrzeug 201 entspricht in Aufbau und Funktionsweise grundsätzlich dem Schienenfahrzeug 101 aus den Figuren 1 und 2, sodass hier hauptsächlich auf die Unterschiede eingegangen werden soll. Identische oder gleichartige Komponenten sind mit um den Wert 100 erhöhten Bezugszeichen versehen. Sofern nachfolgend keine detaillierten Angaben gemacht werden, wird hiermit ausdrücklich auf die obigen Ausführungen bezüglich dieser Komponenten verwiesen.

Zum einfacheren Verständnis der nachfolgenden Erläuterungen ist auch in den Figuren 3 und 4 ein Koordinatensystem angegeben, in dem die x-Koordinate die Längsrichtung des Schienenfahrzeugs 201, die y-Koordinate die Querrichtung des Schienenfahrzeugs 201 und die z-Koordinate die Höhenrichtung des Schienenfahrzeugs 201 bezeichnen.

Die Figur 3 zeigt eine schematische Seitenansicht eines Teils des Fahrzeugs 201, welches eine Fahrzeuglängsachse 201.1 aufweist. Das Fahrzeug 201 umfasst ein Fahrzeuggehäuse in Form eines Wagenkastens 202, der an seinem vorderen Ende auf einem Fahrwerk in Form eines Drehgestells 203 abgestützt ist. Das (in Figur 1 nicht dargestellte) andere Ende des Wagenkastens 202 ist auf einem weiteren Fahrwerk, beispielsweise einem weiteren Drehgestell abgestützt.

Der Wagenkasten 202 definiert einen Fahrzeuginnenraum 202.1, der zur Beförderung von Passagieren dient. Der Fahrzeuginnenraum 202.1 weist dabei einen Fußboden 202.2 auf, der wiederum ein Fußbodenniveau definiert. In Längsrichtung des Fahrzeugs 201 ist hinter dem Drehgestell 203 eine Antriebseinheit 204 mit einem Verbrennungsmotor in Form eines Dieselmotors 205 angeordnet. Der Dieselmotor 205 treibt wiederum einen Generator 204.1 an, der die Antriebsenergie für die elektrischen Fahrmotoren der Triebdrehgestelle des Fahrzeugs 201 zur Verfügung stellt.

Die Antriebseinheit 204 ist unterflur in einer ersten Gehäusekammer 206 des Wagenkastens 202 unterhalb des Fußbodenniveaus angeordnet. Diese erste Gehäusekammer 206 (die in Figur 4 auf Höhe der Linie IV-IV aus Figur 3 aufgeschnitten dargestellt ist) ist bis auf die notwendigen Belüftungsöffnungen und Entlüftungsöffnungen rundum mit einer Schallisolierung und einer Wärmeisolierung versehen, um den durch die erste Gehäusekammer 206 definierten Motorraum gegenüber der Umgebung, insbesondere gegenüber den von Passagieren bzw. Passanten frequentierten Bereichen innerhalb oder außerhalb des Fahrzeugs 201 abzuschirmen bzw. abzukapseln. Gegebenenfalls sind auch die Belüftungsöffnungen und Entlüftungsöffnungen so angeordnet und gestaltet, dass eine möglichst geringe Schallemission aus dem Motorraum 206 erzielt wird.

Durch diese Kapselung des Motorraums 206 wird erreicht, dass Passagiere im Innern des Fahrzeugs und Personen außerhalb des Fahrzeugs zum einen einer möglichst geringen Lärmbelästigung durch das Fahrzeug ausgesetzt sind. Ebenso wird hierdurch erreicht, dass diese Personen keinen übermäßigen Beeinträchtigungen durch die Wärmeabstrahlung des Dieselmotors ausgesetzt sind.

Es versteht sich hierbei zum einen, dass die Schallisolierung und die Wärmeisolierung durch dieselben Bauteile realisiert sein können. Ebenso versteht es sich, dass nur diejenigen Bereiche des Motorraums mit einer entsprechenden Isolierung versehen sein können, welche an die Bereiche angrenzen, die im Normalbetrieb des Fahrzeugs von Personen innerhalb und außerhalb des Fahrzeugs 201 im Normalbetrieb frequentiert werden. Insbesondere kann also vorgesehen sein, dass die den Schienen zugewandte Unterseite des Motorraums, in deren Bereich sich im Normalbetrieb des Fahrzeugs (beispielsweise im Linienbetrieb) keine Personen aufhalten, lediglich mit einer entsprechenden Abdeckung verschlossen, aber nicht mit einer gesonderten Isolierung versehen ist.

Der Dieselmotor 205 ist mit einer Abgasanlage 207 verbunden, welche die Abgase des Dieselmotors 205 in die Umgebung des Fahrzeugs 201 abführt. Die Abgasanlage 207 umfasst je Zylinderbank des Dieselmotors 205 eine Abgasleitung 207.1, über welche das Abgas abgeführt wird. In diese Abgasleitungen 207.1 können jeweils ein oder mehrere Partikelfilter geschaltet sein, um Partikel aus dem Abgas herauszufiltern.

Weiterhin ist in jede Abgasleitung 207.1 ein Zufuhrabschnitt einer Additivzufuhreinrichtung 208 geschaltet. Die Additivzufuhreinrichtung führt dem Abgasstrom ein Additiv zu, welches in einer katalytischen Reaktion, einer so genannten selektiven katalytischen Reduktion (SCR), die Stickoxide (NOₓ) in dem Abgas zu Stickstoff und Wasser umwandelt.

Hierzu umfasst die Additivzufuhreinrichtung 208 einen Vorratsbehälter in Form eines Tanks 208.1, in dem eine wässrige Harnstofflösung vorgehalten wird. Bei dieser Harnstofflösung kann es sich um eine 32,5%ige Harnstofflösung handeln, wie sie häufig unter dem Markennamen AdBlue® vertrieben wird. Es versteht sich jedoch, dass bei anderen Varianten der Erfindung auch Additive anderer Zusammensetzung und/oder anderen Aggregatszustands (beispielsweise in Form eines Feststoffs oder Gases) verwendet werden können, über deren (gegebenenfalls nach einer entsprechenden Aufbereitung erfolgende) Zugabe zum Abgas eine entsprechende Reinigung des Abgases, insbesondere eine entsprechende Reduktion des Stickoxidanteils im Abgas, erzielt werden kann.

Im vorliegenden Beispiel wird die Harnstofflösung aus dem Tank 208.1 über mehrere Zufuhrleitungen 208.2 zu dem jeweiligen Zufuhrabschnitt 208.3 gefördert, der in der jeweiligen Abgasleitung 207.1 möglichst weit stromaufwärts des Abgasstroms (also möglichst nahe an dem Dieselmotor 205) in Bereichen mit möglichst hoher Abgastemperatur angeordnet ist. Sofern ein Abgasturbolader vorhanden ist, ist der jeweilige Zufuhrabschnitt 208.3 bevorzugt unmittelbar stromabwärts des Abgasturboladers angeordnet.

In dem Zufuhrabschnitt 208.3 wird dann ein Teil der Harnstofflösung über Einspritzdüsen zerstäubt und dem Abgas zugeführt. Hierbei ist es günstig, die Einspritzung in einem Bereich mit starker Turbulenz im Abgas vorzunehmen, um eine möglichst gleichmäßige und feine Verteilung der Tröpfchen der Harnstofflösung zu erzielen. Durch die feine Verteilung der Tröpfchen und die hohe Temperatur wird eine besonders gute Bildung von Ammoniak (NH₃) und Kohlendioxid (CO₂) im Abgas erzielt. Diese reagieren dann in weiter stromabwärts liegenden SCR-Katalysatoren 207.2 der Abgasanlage 207 in der oben beschriebenen selektiven katalytischen Reduktion (SCR) mit den Stickoxiden (NOₓ) des Abgases und bewirken so die gewünschte Stickoxidreduzierung, bevor das gereinigte Abgas im Dachbereich des Wagenkastens 202 an die Umgebung abgegeben wird.

Der nicht eingespritzte Teil der Harnstofflösung dient zur Kühlung der Einspritzdüsen und wird in den Tank 208.1 zurückgeführt. Dort kann er in bestimmten Betriebssituationen (Warmlaufphase etc.) unter anderem zur Temperierung der Harnstofflösung dienen.

Wie bereits eingangs erwähnt, ist die Nutztemperatur der Harnstofflösung nach unten durch ihren Gefrierpunkt begrenzt, der etwa bei -11°C liegt. Nach oben ist die Nutztemperatur bzw. Lagertemperatur der Harnstofflösung durch die Temperatur begrenzt, bei der ein Zerfall der Harnstofflösung einsetzt. Dies hat zur Konsequenz, dass eine Temperierung der Harnstofflösung erfolgen muss, um die Einhaltung dieses Nutztemperaturbereichs zu gewährleisten. Mit der vorliegenden Erfindung ist es jedoch auch in diesem Ausführungsbeispiel möglich, den Aufwand hierfür gering zu halten.

So hat die Anordnung des Tanks 208.1 für die Harnstofflösung innerhalb des Motorraums 206 den Vorteil, dass eine gesonderte Wärmeisolation für den Tank 208.1 entfallen kann, da diese Funktion bereits von der Isolation des Motorraums 206 übernommen werden kann. Gegebenenfalls kann es in den oben beschriebenen Fällen, in denen die Unterseite des Motorraums nicht mit einer solchen Isolation versehen ist, lediglich erforderlich sein, eine einfache (beispielsweise plattenförmige) Isolation auf der Unterseite des Tanks vorzusehen. Die Isolation des Motorraums 206 kann zudem einfacher gestaltet sein als eine separate Isolation des Tanks, da schon der Luftraum zwischen dem Tank 206 und der Wandung des Motorraums 206 zur Wärmeisolation beiträgt.

Die Anordnung des Tanks 208.1, der Zufuhrleitungen 208.2 und des Zufuhrabschnitts 208.3 in dem isolierten Motorraum 206 in der Nähe des Dieselmotors 205 hat weiterhin den Vorteil, dass die Abwärme des Dieselmotors 205 sowie der Abgasleitungen 207.1 in einfacher Weise (gegebenenfalls sogar ohne weitere Hilfsmittel) zur Temperierung der Harnstofflösung genutzt werden kann. So kann diese dank der Isolierung nur langsam aus dem Motorraum 206 abgeführte Abwärme bei geringer Motorlast oder sogar nach dem Abstellen des Dieselmotors 205 (dank der Isolation des Motorraums 206) auch bei niedrigen Außentemperaturen noch lange für eine Temperatur oberhalb des Gefrierpunkts der Harnstofflösung in dem Tank 208.1, den Zufuhrleitungen 208.2 und den Zufuhrabschnitten 208.3 sorgen.

Um diesen Effekt zu verstärken, kann in diesen Betriebssituationen (z. B. Schwachlast, Leerlauf, abgestellter Dieselmotor 205 etc.) vorgesehen sein, dass eine Kühleinrichtung (Lüfter etc.) für den Dieselmotor 205 nicht oder nur mit verminderter Kühlleistung betrieben wird.

Weiterhin ist durch diese Anordnung im isolierten Motorraum 206 und damit die Nutzung der Abwärme des Dieselmotors 205 gewährleistet, dass selbst bei einem Unterschreiten des Gefrierpunkts der Harnstofflösung (beispielsweise bei einer langen Ruhezeit bei sehr tiefen Umgebungstemperaturen) schon nach vergleichsweise kurzer Zeit wieder der Nutztemperaturbereich der Harnstofflösung erreicht wird, sodass zusätzliche Heizeinrichtungen für die Harnstofflösung entsprechend klein dimensioniert sein können oder gegebenenfalls sogar entfallen können (wenn beispielsweise eine verminderte Abgasreinigung während der Warmlaufphase des Fahrzeugs akzeptabel ist).

Die jeweilige Zufuhrleitung 208.2 wird weit gehend in der Nähe des Motors 205 bzw. der Abgasleitung 207.1 geführt, um in einfacher Weise über die Wärmeabgabe der Abgasleitung 207.1 eine geeignete Temperierung der Harnstofflösung in der Zufuhrleitung 208.2 zu gewährleisten, sodass auch hier zusätzliche Heizeinrichtungen für die Harnstofflösung entsprechend klein dimensioniert sein können oder gegebenenfalls sogar entfallen können.

In diesem Zusammenhang ist es weiterhin von Vorteil, dass der Tank 208.1, die Zufuhrleitungen 208.2 und die Zufuhrabschnitte 208.3 durch die Anordnung im Motorraum 206 vor dem Fahrtwind geschützt sind, der andernfalls das Erreichen des Nutztemperaturbereichs verzögern würde.

Im vorliegenden Beispiel sind im Bereich der Ansaugöffnung des Tanks 208.1 und im Bereich der Zufuhrleitungen 208.2 zusätzliche Heizeinrichtungen vorgesehen, um in jedem Betriebszustand die Verfügbarkeit der Harnstofflösung und damit der Abgasreinigung zu gewährleisten. Die zusätzlichen Heizeinrichtungen können einfache elektrische Heizeinrichtungen sein. Ebenso kann es sich um Leitungen handeln, in denen ein Teil der Kühlflüssigkeit des Dieselmotors 205 zirkuliert.

Ein weiterer Vorteil der Anordnung des Tanks 208.1, der Zufuhrleitungen 208.2 und der Zufuhrabschnitte 208.3 innerhalb des Motorraums 206 liegt darin, dass im Hinblick auf eine möglicherweise erforderliche Kühlung der Harnstofflösung in einfacher Weise ein gegebenenfalls ohnehin für den Dieselmotor 205 sowie andere Komponenten der Antriebseinrichtung 204 zur Verfügung zu stellender Kühlluftstrom auch für die Kühlung der Harnstofflösung genutzt werden kann. Hierdurch ist mit anderen Worten eine wirtschaftliche Mehrfachnutzung von solchen Kühlvorrichtungen (z. B des Lüfters 204.2 etc.) möglich.

Schließlich ist die Anordnung des Tanks 208.1, der Zufuhrleitungen 208.2 und der Zufuhrabschnitte 208.3 innerhalb des Motorraums 206 dahingehend von Vorteil, dass sie hierdurch in einfacher Weise vor mechanischen Einflüssen (wie beispielsweise Steinschlag oder dergleichen) geschützt sind.

Die dem Dieselmotor 205 nachgeschalteten SCR-Katalysatoren 207.1 sind als langgestreckte Einheiten ausgebildet, die in Höhenrichtung des Fahrzeugs 201 bzw. des Wagenkastens 202 ausgerichtet sind. Die SCR-Katalysatoren 208.3 sind in einer säulenartigen zweiten Gehäusekammer 209 angeordnet, die im Bereich einer Tür 202.3 des Wagenkastens 202 in eine Seitenwand des Wagenkastens 202 integriert ist.

Diese Integration in eine Seitenwand des Wagenkastens 202 im Bereich der Tür 202.3 ist insoweit von Vorteil, als die dadurch entstehende Säule im Passagierraum 202.1 zum einen die Bewegungsfreiheit der Passagiere höchstens in geringem Maße einschränkt und zudem auch unter optischen Gesichtspunkten als wenig störend empfunden wird. Ein weiterer Vorteil liegt darin, dass die Abwärme der in der zweiten Gehäusekammer 209 verlaufenden Komponenten der Abgasanlage 207 genutzt werden kann, auch bei niedrigen Außentemperaturen die Funktion der Komponenten der Tür 202.3 sicherzustellen.

Die zweite Gehäusekammer 209 erstreckt sich über mehr als 50% der Höhenabmessung des Wagenkastens 202 und damit vollständig durch den Passagierraum 202.1 hindurch, sodass sie im Passagierraum 202.1 als Türsäule wahrgenommen wird. Die zweite Gehäusekammer 209 ist an ihren vertikalen Seitenwänden mit einer Schallisolierung und einer Wärmeisolierung versehen, sodass Passagiere im Passagierraum 202.1 sowie Passanten außerhalb des Fahrzeugs 201 weder durch die Schallemission noch durch die Wärmeabgabe der Abgasleitungen 207.1 und der SCR-Katalysatoren 207.2 übermäßig beeinträchtigt werden. Schallisolierung und Wärmeisolierung können wiederum gegebenenfalls in einer Einheit realisiert sein.

Auch hier hat die Anordnung der SCR-Katalysatoren 207.2 innerhalb der zweiten Gehäusekammer 209 den Vorteil, dass eine kompliziert gestaltete gesonderte Wärmeisolation für diese Komponenten entfallen kann, da diese Funktion bereits von der besonders einfach zu gestaltenden Isolation der zweiten Gehäusekammer 209 übernommen werden kann. Diese kann zudem einfacher gestaltet sein, da schon der Luftraum zwischen den Komponenten der Abgasanlage 207, insbesondere den SCR-Katalysatoren 207.2, und der Wandung der zweiten Gehäusekammer 209 zur Wärmeisolation beiträgt.

Hierbei ist insbesondere die vertikale Ausrichtung der Abgasleitungen 207.1 und der SCR-Katalysatoren 207.2 von Vorteil, da sich hierdurch in der zweiten Gehäusekammer 209 (ähnlich wie in einem Kamin) eine günstige natürliche Konvektion einstellen kann, welche den Wärmeübergang begünstigt.

Um diese natürliche Konvektion noch weiter zu begünstigen und bei Bedarf gegebenenfalls auch eine Kühlwirkung durch zugeführte Umgebungsluft zu erzielen, weist die zweite Gehäusekammer 209 an ihrem unteren Ende eine Belüftungsöffnung sowie an ihrem oberen Ende eine Entlüftungsöffnung auf, sodass sich die vertikale Luftströmung in der zweiten Gehäusekammer 209 ungehindert ausbilden kann, wobei auch ein Anteil an Umgebungsluft mitgeführt wird. Die Belüftungsöffnung sowie die Entlüftungsöffnung können beispielsweise jeweils außen in der Seitenwand des Wagenkastens 202 und/oder im Untergestell bzw. im Dachbereich des Wagenkastens 202 vorgesehen sein.

Weiterhin ist zur Begünstigung einer zur erforderlichen Kühlung ausreichenden natürlichen Konvektion vorgesehen, dass der freie Strömungsquerschnitt in der zweiten Gehäusekammer 209, insbesondere zwischen den SCR-Katalysatoren 207.2 und der Wandung der zweiten Gehäusekammer 209, derart bemessen ist, dass sich im Betrieb des Fahrzeugs 201 eine zur alleinigen Kühlung der in der zweiten Gehäusekammer 209 befindlichen Komponenten der Abgasanlage 207 ausreichende natürliche Konvektion einstellt.

Es versteht sich jedoch, dass bei anderen Varianten der Erfindung auch aktive Einrichtungen (Lüfter etc.) und/oder passive Einrichtungen (den Fahrtwind in die zweite Gehäusekammer lenkende Leitbleche, düsenförmige Abschnitte etc.) vorgesehen sein können, die eine erzwungene Konvektion in der zweiten Gehäusekammer bewirken.

Die vorliegende Erfindung wurde vorstehend ausschließlich anhand von Beispielen mit einem unterflur angeordneten Motorraum beschrieben bzw. einer vertikal angeordneten zweiten Gehäusekammer beschrieben. Es versteht sich jedoch, dass die Erfindung auch in Verbindung mit einer beliebigen anderen Anordnung des Motorraums bzw. der zweiten Gehäusekammer zur Anwendung kommen kann. Insbesondere kann der Motorraum auch auf dem Niveau des Passagierraums (in einem abgetrennten Abteil) oder sogar im Dachbereich des Fahrzeugs angeordnet sein. Weiterhin kann bei anderen Varianten der Erfindung nur eine einzige Gehäusekammer (beispielsweise der Motorraum) vorgesehen sein, in welcher der Tank, die Zufuhreinrichtung und die Abgasanlage angeordnet sind.

## Patentansprüche

1. Schienenfahrzeug mit
- einem Fahrzeuggehäuse (102; 202), das einen Fahrzeuginnenraum (102.1; 202.1) definiert,
- einem Verbrennungsmotor (105; 205) und
- einer mit dem Verbrennungsmotor (105; 205) verbundenen Abgasanlage (107; 207) zum Abführen der Abgase des Verbrennungsmotors (105; 205), wobei
- die Abgasanlage eine Additivzufuhreinrichtung (108; 208) umfasst, die dazu ausgebildet ist, dem Abgasstrom des Verbrennungsmotors (105; 205) ein Additiv zur Schadstoffreduzierung zuzuführen, und
- die Additivzufuhreinrichtung (108; 208) einen Vorratsbehälter (108.1; 208.1) für das Additiv und einen damit verbundenen Zufuhrabschnitt (108.3; 208.3) zum Zuführen des Additivs zum Abgasstrom umfasst,
**dadurch gekennzeichnet, dass**
- der Vorratsbehälter (108.1; 208.1) in einer ersten Gehäusekammer (106, 109; 209) des Fahrzeuggehäuses (102; 202) angeordnet ist, wobei
- die erste Gehäusekammer (106, 109; 209) zumindest in den an den Fahrzeuginnenraum (102.1; 202.1) und den an die Umgebung des Fahrzeugs angrenzenden Bereichen, die von Passagieren frequentiert werden, mit einer Wärmeisolierung versehen ist, und
- die erste Gehäusekammer (106; 206) den Motorraum für den Verbrennungsmotor (105; 205) bildet.

2. Schienenfahrzeug nach Anspruch 1, **dadurch gekennzeichnet, dass** der Zufuhrabschnitt (108.3) einen Katalysator zur Schadstoffreduzierung im Abgasstrom, insbesondere einen SCR-Katalysator, umfasst.

3. Schienenfahrzeug nach Anspruch 1 oder 2, **dadurch gekennzeichnet, dass**
- der Vorratsbehälter ein Tank (108.1; 208.1) ist, in dem das Additiv in flüssiger Form vorgehalten ist, wobei
- das Additiv insbesondere eine wässrige Harnstofflösung, insbesondere eine 32,5%ige Harnstofflösung, ist.

4. Schienenfahrzeug nach Anspruch 3, **dadurch gekennzeichnet, dass**
- eine Temperiereinrichtung zum Temperieren des Additivs vorgesehen ist, wobei
- die Temperiereinrichtung zum Temperieren von wenigstens einer Komponente des Vorratsbehälters (108.1; 208.1) und/oder von wenigstens einer Komponente der das Additiv von dem Tank (108.1; 208.1) zu dem Zufuhrabschnitt (108.3; 208.3) führenden Leitungen (108.2; 208.2) und/oder von wenigstens einer Komponente des Zufuhrabschnitts (108.3; 208.3) ausgebildet ist, wobei
- die Temperiereinrichtung insbesondere eine elektrisch betriebene Heizleitung und/oder eine von einem Kühlmittelkreislauf des Verbrennungsmotors (105; 205) gespeiste Heizleitung umfasst
und/oder
- die Temperiereinrichtung insbesondere wenigstens eine Kühleinrichtung (104.2) umfasst, wobei die Kühleinrichtung insbesondere wenigstens einen Ventilator (104.2) einer Kühlvorrichtung des Verbrennungsmotors (105; 205) umfasst.

5. Schienenfahrzeug nach einem der vorhergehenden Ansprüche, **dadurch gekennzeichnet, dass** der Vorratsbehälter (108.1; 208.1) dem Verbrennungsmotor (105; 205) benachbart angeordnet ist.

6. Schienenfahrzeug nach einem der vorhergehenden Ansprüche , **dadurch gekennzeichnet, dass** die erste Gehäusekammer (106; 206) gegenüber ihrer Umgebung im Wesentlichen vollständig mit einer Schallisolierung und/oder einer Wärmeisolierung versehen ist.

7. Schienenfahrzeug nach einem der vorhergehenden Ansprüche , **dadurch gekennzeichnet, dass**
- das Fahrzeuggehäuse (102; 202) im Fahrzeuginnenraum (102.1; 202.1) ein Fußbodenniveau für Passagiere definiert und
- die erste Gehäusekammer (106; 206) unterhalb des Fußbodenniveaus angeordnet ist.

8. Schienenfahrzeug nach einem der vorhergehenden Ansprüche, **dadurch gekennzeichnet, dass**
- der Zufuhrabschnitt (108.3) und/oder ein Katalysator (207.2) zur Schadstoffreduzierung in einer zweiten Gehäusekammer (109) angeordnet ist, wobei
- die zweite Gehäusekammer (109; 209) insbesondere im Bereich einer Seitenwand und/oder einer Stirnwand des Fahrzeuggehäuses (102; 202) angeordnet ist,
und/oder
- sich die zweite Gehäusekammer (109; 209) insbesondere in Höhenrichtung des Fahrzeuggehäuses (102; 202) über wenigstens 50% der Höhe des Fahrzeuggehäuses (102; 202) erstreckt.

9. Schienenfahrzeug nach Anspruch 8, **dadurch gekennzeichnet, dass**
- der Fahrzeuginnenraum (102.1; 202.1) einen Passagierraum aufweist und sich die zweite Gehäusekammer (109; 209) in Höhenrichtung des Fahrzeuggehäuses (102; 202) über die Höhe des Passagierraums erstreckt
und/oder
- die zweite Gehäusekammer (109; 209) einen säulenartigen Abschnitt im Innenraum des Fahrzeuggehäuses (102; 202) definiert
und/oder
- die zweite Gehäusekammer (109; 209) im Bereich einer Türöffnung (102.2) des Fahrzeuggehäuses (102; 202) angeordnet ist.

10. Schienenfahrzeug nach einem der Ansprüche 8 oder 9, **dadurch gekennzeichnet, dass**
- der Zufuhrabschnitt (108.3) und/oder der Katalysator (207.2) zur Schadstoffreduzierung langgestreckt ausgebildet ist, wobei
- der Zufuhrabschnitt (108.3) und/oder der Katalysator (207.2) zur Schadstoffreduzierung eine Längsachse definiert, die in Höhenrichtung des Fahrzeuggehäuses (102; 202) ausgerichtet ist.

11. Schienenfahrzeug nach einem der Ansprüche 8 bis 10, **dadurch gekennzeichnet, dass** eine Konvektionseinrichtung zur Erzeugung einer den Zufuhrabschnitt (108.3) und/oder den Katalysator (207.2) zur Schadstoffreduzierung kühlenden Konvektion in der zweiten Gehäusekammer (109; 209) vorgesehen ist.

12. Schienenfahrzeug nach Anspruch 11, **dadurch gekennzeichnet, dass**
- die Konvektionseinrichtung einen zwischen dem Zufuhrabschnitt (108.3; 208.3) und der Wandung der zweiten Gehäusekammer (109; 209) ausgebildeten freien Strömungsquerschnitt umfasst, wobei
- der freie Strömungsquerschnitt derart bemessen ist, dass sich im Betrieb des Fahrzeugs eine zur alleinigen Kühlung des Zufuhrabschnitts (108.3) und/oder des Katalysators (207.2) zur Schadstoffreduzierung ausreichende natürliche Konvektion einstellt.

13. Schienenfahrzeug nach einem der Ansprüche 8 bis 12, **dadurch gekennzeichnet, dass** die zweite Gehäusekammer(1 09; 209)
- wenigstens eine Entlüftungsöffnung aufweist und
- insbesondere wenigstens eine Belüftungsöffnung aufweist.

14. Schienenfahrzeug nach Anspruch 13, **dadurch gekennzeichnet, dass**
- die Entlüftungsöffnung im Bereich eines oberen Endes der zweiten Gehäusekammer (109; 209) angeordnet ist und
- die Belüftungsöffnung im Bereich eines unteren Endes der zweiten Gehäusekammer (109; 209) angeordnet ist.

15. Schienenfahrzeug nach einem der vorhergehenden Ansprüche, **dadurch gekennzeichnet, dass**
- die erste Gehäusekammer (106, 109; 209) zumindest in den an den Fahrzeuginnenraum (102.1; 202.1) und/oder an die Umgebung des Fahrzeugs angrenzenden Bereichen, die von Passagieren frequentiert werden, mit einer Schallisolierung versehen ist
und/oder
- der Zufuhrabschnitt (108.3; 208.3) und/oder ein Katalysator (207.2) zur Schadstoffreduzierung in wenigstens einer Gehäusekammer (106, 109; 209) des Fahrzeuggehäuses (102; 202) angeordnet ist, die zumindest in den an den Fahrzeuginnenraum (102.1; 202.1) und/oder den an die Umgebung des Fahrzeugs angrenzenden Bereichen, die von Passagieren frequentiert werden, mit einer Schallisolierung versehen ist.

## Claims

1. A rail vehicle comprising
- a vehicle body (102; 202) defining a vehicle interior (102.1; 202.1),
- an internal combustion engine (105; 205), and
- an exhaust gas system (107; 207) in communication with said internal combustion engine (105; 205) for evacuating exhaust gases of said internal combustion engine (105; 205), wherein
- said exhaust gas system comprises an additive supply unit (108; 208) designed to supply an additive for pollutant reduction to said exhaust gas stream of said internal combustion engine (105; 205), and
- said additive supply unit (108; 208) comprises a reservoir (108.1; 208.1) for said additive and a supply section (108.3; 208.3) connected thereto for supplying said additive to said exhaust gas stream,
**characterised in that**
- said reservoir (108.1; 208.1) is arranged in a first body chamber (106, 109; 209) of said vehicle body (102; 202), wherein
- said first body chamber (106, 109; 209) is provided with thermal insulation at least in the areas adjacent to said vehicle interior (102.1; 202.1) and to the environment of said vehicle, which are frequented by passengers, and
- said first body chamber (106; 206) forms the engine compartment for said internal combustion engine (105; 205).

2. The rail vehicle according to Claim 1, **characterised in that** said supply section (108.3) comprises a catalyst for pollutant reduction in said exhaust gas stream, in particular an SCR catalyst.

3. The rail vehicle according to Claim 1 or 2, **characterised in that**
- said reservoir is a tank (108.1; 208.1) in which said additive is stored in a liquid form, wherein
- said additive, in particular, is an aqueous urea solution, in particular a 32.5% urea solution.

4. The rail vehicle according to Claim 3, **characterised in that**
- a tempering unit for tempering said additive is provided, wherein
- said tempering unit is designed for tempering at least one component of said reservoir (108.1; 208.1) and/or at least one component of the conduits (108.2; 208.2) carrying said additive from said tank (108.1; 208.1) to said supply section (108.3; 208.3) and/or at least one component of said supply section (108.3; 208.3).
- said tempering unit, in particular, comprising an electrically operated heating line and/or a heating line fed from a coolant circuit of said internal combustion engine (105; 205)
and/or
- said tempering unit, in particular, comprising at least one cooling unit (104.2), said cooling unit, in particular, comprising at least one fan (104.2) of a cooling device of said internal combustion engine (105; 205).

5. The rail vehicle according to any one of the preceding claims, **characterised in that** said reservoir (108.1; 208.1) is mounted adjacent to said internal combustion engine (105; 205).

6. The rail vehicle according to any one of the preceding claims, **characterised in that** said first body chamber (106; 206) is essentially completely provided with sound insulation and/or thermal insulation against the environment thereof.

7. The rail vehicle according to any one of the preceding claims, **characterised in that**
- said vehicle body (102; 202) defines a floor level for passengers in said vehicle interior (102.1; 202.1), and
- said first body chamber (106; 206) is disposed below floor level.

8. The rail vehicle according to any one of the preceding claims, **characterised in that**
- said supply section (108.3) and/or a catalyst (207.2) for pollutant reduction is arranged in a second body chamber (109),
- said second body chamber (109; 209), in particular, being positioned in the area of a lateral wall and/or a front wall of said vehicle body (102; 202)
and/or
- said second body chamber (109; 209), in particular, extending in the height direction of said vehicle body (102; 202) over at least 50% of the height of said vehicle body (102; 202).

9. The rail vehicle according to any Claim 8, **characterised in that**
- said vehicle interior (102.1; 202.1) includes a passenger compartment, and said second body chamber (109; 209), in the height direction of said vehicle body (102; 202), extends over the height of said passenger compartment,
and/or
- said second body chamber (109; 209) defines a column-like section in said interior of said vehicle body (102; 202)
and/or
- said second body chamber (109; 209) is positioned in the area of a door opening (102.2) of said vehicle body (102; 202).

10. The rail vehicle according to any one of Claims 8 or 9, **characterised in that**
- said supply section (108.3) and/or said catalyst (207.2) for pollutant reduction are formed to be elongated, wherein
- said supply section (108.3) and/or said catalyst (207.2) for pollutant reduction defines a longitudinal axis which is orientated in the height direction of said vehicle, body (102; 202).

11. The rail vehicle according to any one of Claims 8 to 10, **characterised in that** a convection unit for generating convection for cooling said supply section (108.3) and/or said catalyst (207.2) for pollutant reduction is provided in said body chamber (109; 209).

12. The rail vehicle according to Claim 11, **characterised in that**
- said convection unit comprises a free flow cross section formed between said supply section (108.3; 208.3) and the wall of said second body chamber (109; 209), wherein
- said free flow cross section is dimensioned such that during operation of said vehicle, a natural convection sufficient in itself for cooling said supply section (108.3) and/or said catalyst (207.2) for pollutant reduction occurs.

13. The rail vehicle according to any one of Claims 8 to 12, **characterised in that** said second body chamber (109; 209) includes
- at least one air outlet opening, and
- in particular at least one air inlet opening.

14. The rail vehicle according to Claim 13, **characterised in that**
- said air outlet opening is provided in the area of an upper end of said second body chamber (109; 209), and
- said air inlet opening is provided in the area of a lower end of said second body chamber (109; 209).

15. The rail vehicle according to any one of the preceding claims, **characterised in that**
- said first body chamber (106, 109; 209) is provided with acoustic insulation at least in the areas adjacent to said vehicle interior (102.1; 202.1) and/or to the environment of said vehicle, which are frequented by passengers,
and/or
- said supply section (108.3; 208.3) and/or a catalyst (207.2) for pollutant reduction is arranged in at least one body chamber (109) of said vehicle body (102; 202), which is provided with acoustic insulation and/or thermal insulation at least in the areas adjacent to said vehicle interior (102.1; 202.1) and/or to the environment of said vehicle, which are frequented by passengers.

## Revendications

1. Véhicule ferroviaire avec
- un corps de véhicule (102; 202) délimitant un espace intérieur du véhicule (102.1; 202.1)
- un moteur à combustion (105; 205) et
- un système d'échappement relié au moteur à combustion (105; 205) pour l'évacuation des gaz d'échappement du moteur à combustion (105; 205),
- le système d'échappement comprenant un dispositif d'alimentation (108; 208) en additif conçu pour introduire un additif réduisant les substances nocives dans le flux de gaz d'échappement du moteur à combustion (105; 205), et
- le dispositif d'alimentation (108; 208) en additif comprenant un réservoir (108.1; 208.1) pour l'additif et une section d'alimentation (108.3; 208.3) reliée à ce dernier pour l'alimentation de l'additif vers le flux de gaz d'échappement,
**caractérisé en ce que**
- le réservoir (108.1; 208.1) est placé dans un premier compartiment (106; 109; 209) du corps du véhicule (102; 202),
- le premier compartiment (106; 109; 209) étant pourvu d'une isolation thermique au moins dans les parties adjacentes à l'espace intérieur (102.1; 202.1) du véhicule et aux zones entourant le véhicule qui sont fréquentées par des passagers et
- le premier compartiment (106; 206) constitue le compartiment moteur pour le moteur à combustion (105; 205).

2. Véhicule ferroviaire conforme à la revendication 1, **caractérisé en ce que** la section d'alimentation (108.3) comprend un catalyseur pour la réduction des substances nocives dans le flux de gaz d'échappement, en particulier un catalyseur SCR.

3. Véhicule ferroviaire conforme à la revendication 1 ou 2, **caractérisé en ce que**
- le réservoir est une cuve (108.1; 208.1) dans laquelle l'additif est conservé sous forme liquide, étant précisé que
- l'additif est en particulier une solution aqueuse d'urée, en particulier une solution d'urée à 32,5 %.

4. Véhicule ferroviaire conforme à la revendication 3, **caractérisé en ce que**
- un dispositif de régulation de température est prévu pour réguler la température de l'additif,
- le dispositif de régulation de température étant prévu pour réguler la température d'au moins un composant du réservoir (108.1; 208.1) et/ou d'au moins un composant des conduites (108.2; 208.2) acheminant l'additif de la cuvé (108.1; 208.1) à la section d'alimentation (108.3; 208.3) et/ou d'au moins un composant de la section d'alimentation (108.3; 208.3),
- le dispositif de régulation de température comprenant en particulier une ligne chauffante électrique et/ou une ligne chauffante alimentée par un circuit de refroidissement du moteur à combustion (105; 205)
et/ou
- le dispositif de régulation de température comprenant en particulier au moins un dispositif de refroidissement (104.2), étant précisé que celui-ci comprend en particulier au moins un ventilateur (104.2) d'un dispositif de refroidissement du moteur à combustion (105; 205).

5. Véhicule ferroviaire conforme à l'une des revendications précédentes, **caractérisé en ce que** le réservoir (108.1; 208.1) est placé de manière adjacente au moteur à combustion (105; 205).

6. Véhicule ferroviaire conforme à l'une des revendications précédentes, **caractérisé en ce que** le premier compartiment (106; 206) est essentiellement complètement pourvu d'une isolation acoustique et/ou thermique vis-à-vis de son environnement.

7. Véhicule ferroviaire conforme à l'une des revendications précédentes, **caractérisé en ce que**
- le corps du véhicule (102; 202) délimite un niveau de plancher pour les passagers dans l'espace intérieur (102.1; 202.1) et
- le premier compartiment (106; 206) est disposé au-dessous du niveau du plancher.

8. Véhicule ferroviaire conforme à l'une des revendications précédentes, **caractérisé en ce que**
- la section d'alimentation (108.3) et/ou un catalyseur pour la réduction des substances nocives est placé dans un deuxième compartiment (109),
- le deuxième compartiment (109; 209) étant disposé en particulier dans la zone d'une paroi latérale et/ou d'une cloison du corps du véhicule (102; 202),
et/ou
- deuxième compartiment (109; 209) s'étend en particulier dans le sens de la hauteur du corps du véhicule (102; 202) sur au moins 50% de la hauteur du corps du véhicule (102; 202).

9. Véhicule ferroviaire conforme à la revendication 8, **caractérisé en ce que**
- l'espace intérieur du véhicule (102.1; 202.1) présente une cabine passagers et le deuxième compartiment (109; 209) s'étend, dans le sens de la hauteur du corps du véhicule, au-dessus de la hauteur de la cabine passagers
et/ou
- le deuxième compartiment (109; 209) délimite une section en forme de colonne dans l'espace intérieur du corps du véhicule (102; 202)
et/ou
- le deuxième compartiment (109; 209) est disposé dans la zone d'une ouverture des portes (102.2) du corps du véhicule (102; 202)

10. Véhicule ferroviaire conforme à l'une des revendications 8 ou 9, **caractérisé en ce que**
- la section d'alimentation (108.3) et/ ou le catalyseur pour la réduction des substances nocives (207.2) est conçu de forme allongée,
- la section d'alimentation (108.3) et/ ou le catalyseur pour la réduction des substances nocives (207.2) définissant, un axe longitudinal orienté dans le sens de la hauteur du corps du véhicule (102; 202).

11. Véhicule ferroviaire conforme à l'une des revendications 8 à 10, **caractérisé en ce qu'**un dispositif de convection est prévu dans le deuxième compartiment (109; 209) pour la production d'une convection refroidissant la section d'alimentation (108.3) et/ou le catalyseur (207.2) pour la réduction des substances nocives.

12. Véhicule ferroviaire conforme à la revendication 11, **caractérisé en ce que**
- le dispositif de convection comprend une section transversale d'écoulement libre formée entre la section d'alimentation (108.3; 208.3) et la paroi du deuxième compartiment (109; 209),
- la section transversale d'écoulement libre est dimensionnée de telle manière que, lorsque le véhicule est en fonctionnement, il s'établit une convection naturelle suffisante elle-même pour le refroidissement de la section d'alimentation et/ou du catalyseur pour la réduction des substances nocives.

13. Véhicule ferroviaire conforme à l'une des revendications 8 à 12, **caractérisé en ce que** le deuxième compartiment comprend
- au moins un orifice de sortie d'air et,
- en particulier, au moins un orifice d'entrée d'air.

14. Véhicule ferroviaire conforme à la revendication 13, **caractérisé en ce que**
- l'orifice de sortie d'air est disposé dans la zone d'une extrémité supérieure du deuxième compartiment (109; 209), et
- l'orifice d'entrée d'air est disposé dans la zone d'une extrémité inférieure du deuxième compartiment (109; 209).

15. Véhicule ferroviaire conforme à l'une des revendications précédentes, **caractérisé en ce que**
- le premier compartiment (106; 109; 209) est pourvu d'une isolation acoustique au moins dans les parties adjacentes à l'espace intérieur (102.1; 202.1) du véhicule et/ou aux zones entourant le véhicule qui sont fréquentées par des passagers
et/ou
- la section d'alimentation (108.3; 208.3) et/ou un catalyseur pour la réduction des substances nocives (207.2) est disposé dans au moins un compartiment (106, 109; 209) du corps du véhicule (102; 202), qui est pourvu d'une isolation acoustique et/ou d'une isolation thermique au moins dans les parties adjacentes à l'espace intérieur (102.1; 202.1) du véhicule et/ou aux zones entourant le véhicule qui sont fréquentées par des passagers.
